# EUROPÄISCHE PATENTSCHRIFT

(11) **EP 3 081 944 B1**
(45) Veröffentlichungstag und Bekanntmachung des Hinweises auf die Patenterteilung: **11.07.2018**
(21) Anmeldenummer: 16000667.2
(22) Anmeldetag: 18.03.2016
(51) Int. Cl.: G01P 3/488, G01P 13/04

(54) **ANORDNUNG ZUR ERMITTLUNG EINER DREHZAHL UND DREHRICHTUNG EINES ROTIERENDEN BAUTEILS**
DEVICE FOR DETERMINING A DIRECTION AND SPEED OF A ROTATING COMPONENT
DISPOSITIF DE DETERMINATION DU REGIME ET DU SENS DE ROTATION D'UN COMPOSANT ROTATIF

(30) Priorität: 18.04.2015 DE 102015004992
(43) Veröffentlichungstag der Anmeldung: 19.10.2016
(73) Patentinhaber: MAN Truck & Bus AG, 80995 München (DE)
(72) Erfinder: Kock, Peter, 85646 Anzing (DE); Bücklers, Günter, 81241 München (DE); Steinberg, Christoph, 85221 Dachau (DE)
(74) Vertreter: v. Bezold & Partner Patentanwälte - PartG mbB

(56) Entgegenhaltungen:
- DE-A1- 4 141 958
- DE-A1- 19 714 351
- US-A- 4 253 341
- US-A1- 2006 082 365
- US-A1- 2008 083 168
- US-A1- 2008 180 089

## Beschreibung

Die Erfindung betrifft eine Anordnung zur berührungslosen Ermittlung einer Drehzahl und Drehrichtung eines im Betrieb rotierenden Bauteils, insbesondere einer magnetisierbaren Welle eines Kraftfahrzeugs.

Aus dem Stand der Technik sind unterschiedliche Drehzahlsensoren zur Ermittlung der Drehzahl eines im Betrieb rotierenden Bauteils bekannt. Solche Drehzahlsensoren werden beispielsweise zur Erfassung einer Drehzahl und Drehrichtung eines Zahnrades oder einer Getriebewelle in einem Getriebe eines Kraftfahrzeuges eingesetzt.

Zur berührungslosen Drehzahlerfassung werden üblicherweise Drehzahlsensoren verwendet, die mit einem Magnetfeldsensor (z. B. Hallsensor) ausgestattet sind. Hierbei wird von einem Magneten im Bereich der Hallsensoren ein magnetisches Feld erzeugt, welches sich beim Passieren eines Zahns des Zahnrades verändert. Der Hallsensor erfasst hierbei zunächst einmal das sog. Grundfeld des Magneten. Zu dieser Feldstärke des Grundfelds wird noch ein aus der Masse des Zahnrads oder eines vergleichbaren Bauteils herrührende Feldstärke hinzuaddiert. Wenn dann dem Sensor anstelle einer Zahnlücke ein Zahn zugeordnet ist, so führt dies für die Dauer der Zuordnung des Zahns zum Sensor zu einer nochmaligen Verstärkung des Magnetfelds. Wenn sich also das Zahnrad dreht, so erfolgt eine Schwankung der Feldstärke in Abhängigkeit vom Vorbeibewegen der Zähne und Zahnlücken am Sensor. Die Hallsensoren erfassen somit diese Änderung des magnetischen Feldes und erzeugen elektrische Signale, aus denen sich die Drehzahl oder ein Stellwinkel des Zahnrades ermitteln lässt. Jeder Zahn ergibt somit einen Impuls, und durch Zählen der Impulse kann man die Drehzahl ermitteln. Genauer gesagt erkennt der Drehzahlsensor nicht den Zahn als solchen, sondern jeweils den Übergang von Zahn zu Zahnlücke oder umgekehrt.

Aus den Offenlegungsschriften DE 41 41 958 A1 und EP 0 800 087 A2 sind insbesondere Drehzahlsensoren bekannt, die zwei Hall-Elemente aufweisen. Zur Drehzahlmessung wird der Drehzahlsensor z. B. gegenüber dem Zahnrad derart angeordnet, dass ein Zahn des Zahnrades bei einer Drehbewegung zuerst den ersten und anschließend den zweiten Hallsensor passiert. Hierzu müssen die zwei Hall-Elemente in der Umfangsrichtung bzw. Drehrichtung des Zahnrads bzw. des Bauteils gesehen versetzt angeordnet sein. Bei solchen, in Drehrichtung des Zahnrads gesehen, versetzten Hall-Elementen kommt der Zahn zunächst an einem und nach einem gewissen Drehwinkel am zweiten Hall-Element an. Die hieraus resultierenden Schwingungen des Magnetfelds der beiden Sensoren sind über die Zeit gesehen gegeneinander versetzt, wodurch zusätzlich nicht nur die Drehgeschwindigkeit und Winkelbeschleunigung bestimmt werden können, sondern auch die Drehrichtung, da je nach Drehrichtung zuerst das eine Hall-Element oder zuerst das andere Hall-Element die Schwankung misst.

Wenn nun jedoch ein derartiger Drehsensor so eingebaut ist, dass ein stillstehender Zahn gleichzeitig beiden Hall-Elementen gegenübersteht, d. h. beide Hall-Elemente haben zur Flanke des nächsten Zahnes den gleichen Abstand, so ist die gesamte Magnetfeldstärke an beiden Hall-Elementen zum jeweiligen Messzeitpunkt gleich groß, und eine Drehrichtung kann nicht mehr bestimmt werden. Dieses Problem kann insbesondere bei Drehzahlsensoren auftreten, die zur Montage verschraubt werden. Wenn die Verdrehstellung des Sensors in der verschraubten Stellung so ist, dass die beiden Hall-Elemente im Wesentlichen den gleichen Abstand zur Flanke des nächsten Zahnes aufweisen, kann keine Drehrichtung bestimmt werden oder es kann zu Messungenauigkeiten kommen, wenn die Abstandsdifferenz zu klein bzw. unbekannt ist. Bei derartigen Sensoren ist somit immer beim Einbau darauf zu achten, dass die beiden Hall-Elemente in der Endstellung korrekt ausgerichtet sind, so dass gegebenenfalls eine zeitaufwändige Nachjustierung erforderlich ist.

Zur Vermeidung dieses Problems wird in der DE 41 41 958 A1 ein Drehzahlsensor vorgeschlagen, bei dem die beiden Hall-Elemente und der Magnet im Drehzahlsensor relativ verschieblich angeordnet sind. Beispielsweise wird vorgeschlagen, dass der Magnet in einen Halter eingesetzt wird, der im Inneren des Drehzahlsensors gegenüber dem Körper verschiebbar ist. Damit können zwar Fehlausrichtungen korrigiert werden, dies ist jedoch zeitaufwändig, fehleranfällig und erfordert entsprechend geschultes Fachpersonal beim Einbau.

Aus der US 2008/180089 A1 ist eine Sensoranordnung bekannt, bei der zwei Magnetfeldsensoren Signale in Reaktion auf die Bewegung eines Zielobjekts ausgeben, wobei die Sensoren so angeordnet sind, dass deren Ausgangssignale 90 Grad phasenverschoben sind. Aus der DE 197 14 351 A1 ist ein Verfahren und Vorrichtung zum Erfassen von Gas- und Flüssigkeitsvolumina mit Volumenzählern bekannt, bei dem beim berührungslosen Vorbeibewegen eines an der Welle des Messorgans befestigten Dauermagneten an feststehenden Impulsdrahtsensoren durch deren Ummagnetisierung Spannungsimpulse erzeugt werden, mit denen das vom Messorgan bestimmte Volumen mit einer elektronischen Impulsverarbeitungseinrichtung erfasst und von einem elektronischen Zählwerk angezeigt wird. Aus der US 2006/082365 A1 ist eine Sensoranordnung bekannt, bei dem das Sensorgehäuse, das einem Geschwindigkeitsrad zugewandt ist, eine oder mehrere Vorsprünge hat, die zur Konzentration des magnetischen Flusses dienen. Aus der US 2008/083168 A1 ist eine Antriebsanordnung für eine Fahrzeugtür bekannt, aufweisend zwei Hall-Sensormodule, mit denen eine Drehrichtung des Rotors erfasst wird. Aus der US 4 253 341 A ist eine Wassermessvorrichtung bekannt, bei der die Drehbewegung eines Drehkörpers von magnetischen Feldsensoren erfasst wird.

Es ist somit eine Aufgabe der Erfindung, eine verbesserte Anordnung, insbesondere einen verbesserten Drehsensor zur berührungslosen Ermittlung einer Drehzahl und Drehrichtung eines im Betrieb rotierenden Bauteils bereitzustellen, mit der bzw. dem Nachteile herkömmlicher Techniken vermieden werden können. Die Aufgabe der Erfindung ist es insbesondere, einen Drehzahlsensor bereitzustellen, mit dem eine Drehzahl und Drehrichtung eines rotierenden Bauteils ermittelbar sind und der sich schnell montieren lässt und keine aufwändige Kalibrierung oder Justierung erfordert.

Diese Aufgaben werden durch eine Anordnung zur berührungslosen Ermittlung einer Drehzahl und Drehrichtung eines im Betrieb rotierenden Bauteils mit den Merkmalen des unabhängigen Anspruchs gelöst. Vorteilhafte Ausführungsformen und Anwendungen der Erfindung ergeben sich aus den abhängigen Ansprüchen.

Die erfindungsgemäße Anordnung weist in Übereinstimmung mit dem Stand der Technik ein im Betrieb rotierendes Bauteil auf, wobei das Bauteil an zumindest einem Umfangsbereich eine Umfangsstruktur aus steg- oder zahnförmig ausgebildeten radialen Vorsprüngen und dazwischen liegenden Nuten oder Zahnlücken aufweist. Die Umfangsstruktur kann Teil der Oberflächenstruktur des rotierenden Bauteils sein oder in Form eines separaten Drehzahlgebers, der auf das Bauteil montiert ist, vorgesehen sein. Das Bauteil kann beispielsweise eine magnetisierbare Welle, d. h. eine Welle aus einem ferromagnetischen Material, sein.

Die Anordnung umfasst ferner eine verschraubbare Sensorvorrichtung, mittels der die Drehzahl und Drehrichtung des Bauteils ermittelbar ist. Die Sensorvorrichtung weist einen Gewindeabschnitt auf, über den die Sensorvorrichtung zur ortsfesten Anordnung der Sensorvorrichtung verschraubt werden kann. Die Sensorvorrichtung wird so angeordnet, dass die Umfangsstruktur an der Sensorvorrichtung vorbeibewegbar ist. Die Sensorvorrichtung weist ferner eine Magnetfelderzeugungseinrichtung und eine Magnetfelderfassungseinrichtung auf. Die Sensorvorrichtung wird nachfolgend auch als Drehzahlsensor bezeichnet.

Gemäß allgemeinen Gesichtspunkten der Erfindung weist die Magnetfelderfassungseinrichtung mindestens drei Magnetfeldsensoren auf, die nicht entlang einer Linie fluchtend angeordnet und somit versetzt angeordnet sind. Mit anderen Worten sind die Magnetfeldsensoren so versetzt angeordnet, dass unabhängig von der Einbauverschraubstellung der Sensorvorrichtung bei Drehung des Bauteils jeder Vorsprung zumindest zwei der mindestens drei Magnetfeldsensoren zeitlich versetzt erreicht. In der Umfangsrichtung der Vorsprünge bzw. in Drehrichtung des Bauteils gesehen sind somit immer mindestens zwei der mindestens drei Magnetfeldsensoren versetzt angeordnet. Der Abstand der am weitesten voneinander entfernten Magnetfeldsensoren ist hierbei kleiner gleich einer Breite der Nuten oder Zahnlücken der Umfangsstruktur. Die Magnetfeldsensoren sind so angeordnet, dass sie mit der Magnetfelderzeugungseinrichtung zusammen wirken und der Umfangsstruktur des rotierenden Bauteils zugewandt sind.

Das erfindungsgemäße Vorsehen von mindestens drei Magnetfeldsensoren bietet den besonderen Vorzug, dass unabhängig von der Einbaulage des Sensors, d. h. der Verdrehstellung im eingeschraubten Zustand, immer mindestens zwei Magnetfeldsensoren einen unterschiedlichen Abstand von der Flanke des nächstliegenden Vorsprungs haben, so dass neben der Bestimmung der Drehwinkelgeschwindigkeit auch immer eine Bestimmung der Drehrichtung möglich ist - unabhängig davon, in welcher Verdrehstellung die Sensorvorrichtung montiert ist. Aus diesem Grund ist es nicht erforderlich, bei der Verschraubung der Sensorvorrichtung darauf zu achten, wie die Magnetfeldsensoren in der Endlage ausgerichtet sind, so dass die Erfindung eine schnelle Montage ermöglicht und montagebedingte Messfehler vermieden werden. Ferner wird dadurch, dass der Abstand der am weitesten voneinander entfernten Magnetfeldsensoren kleiner gleich einer Breite der Nuten oder Zahnlücken ist, sichergestellt, dass die von verschiedenen Sensoren registrierte Änderung der Magnetfeldstärke durch das rotierende Bauteil von der gleichen Flanke erzeugt wird. Dies ermöglicht eine zuverlässige Messung der Wellendrehwinkelgeschwindigkeit und der Drehrichtung.

Ein besonders bevorzugtes Ausführungsbeispiel sieht hierbei vor, dass die Magnetfelderfassungseinrichtung aus drei Magnetfeldsensoren gebildet ist, die in Form eines Dreiecks angeordnet sind. Hierbei sind die Seitenlängen des Dreiecks kleiner gleich einer Breite der Nuten oder Zahnlücken. Besonders vorteilhaft ist hierbei die Anordnung in Form eines gleichseitigen Dreiecks. Die Anordnung in Form eines gleichseitigen Dreiecks ermöglicht eine vereinfachte Auswertung und rechnerische Verarbeitung der erfassten Magnetfeldsignale. Ferner wird dadurch sichergestellt, dass in jeder Drehstellung die beiden Magnetfeldsensoren, die in Drehrichtung gesehen am weitesten voneinander entfernt sind, einen gewissen Mindestabstand zueinander aufweisen, was für die Erfassung möglichst großer Frequenzen vorteilhaft ist.

Erfindungsgemäß ist ferner eine Auswerteeinheit zur Auswertung der Ausgangssignale der mindestens drei Magnetfeldsensoren vorgesehen, die eingerichtet ist, die beiden in Drehrichtung des Bauteils, d. h. die in Umfangsrichtung des Bauteils bzw. der Vorsprünge gesehen, am weitesten voneinander beabstandeten Magnetfeldsensoren zu bestimmen und zur Bestimmung einer Drehrichtung die gemessenen Flussänderungen dieser zwei Magnetfeldsensoren zu verwenden.

Damit wird sichergestellt, dass in jeder Einbaulage diejenigen zwei Magnetfeldsensoren zur Messung verwendet werden, zwischen denen die Zeitdifferenz der durch die Flanke eines Vorsprungs erzeugten Magnetfeldänderung am größten ist, was die Messgenauigkeit verbessert. Die Auswerteeinheit ist vorzugsweise als Teil der internen Auswerteelektronik der Sensorvorrichtung ausgebildet, kann jedoch auch als externe Auswerteeinheit ausgeführt sein.

Vorteilhafterweise weist die Sensorvorrichtung eine Anlernfunktion auf, mittels der in der Sensorvorrichtung hinterlegbar ist, welcher der beiden zur Bestimmung der Drehrichtung verwendeten Magnetfeldsensoren zuerst eine Flussänderung von niedrigem Fluss auf höheren Fluss erfassen muss, damit eine erste Drehrichtung und nicht die entgegengesetzte Drehrichtung vorliegt. In einer Anlernphase wird somit das Bauteil in einer vorgegebenen ersten Drehrichtung rotiert und ausgewertet, welcher der Magnetfeldsensoren die Flussänderung von niedrigem Fluss auf höheren Fluss zuerst erkennt. Wenn im Normalbetrieb dieser Sensor wiederum vor dem anderen Sensor zuerst die Flussänderung von niedrigem Fluss auf höheren Fluss erkennt, liegt diese erste Drehrichtung vor, andernfalls ist es die entgegengesetzte Drehrichtung.

Gemäß einer weiteren Ausführungsvariante sind die mindestens drei Magnetfeldsensoren in einer Ebene senkrecht zu einer Radialrichtung des Bauteils bzw. der Umfangsstruktur angeordnet, so dass die Sensoren im Wesentlichen den gleichen Radialabstand zum rotierenden Bauteil haben.

Eine weitere Möglichkeit der erfindungsgemäßen Realisierung sieht vor, dass die Sensorvorrichtung eingerichtet ist, eine Vibration des Bauteils zu erkennen, falls die Magnetfeldsensorsignale eine Drehwinkelgeschwindigkeit ungleich Null, aber keine eindeutige Drehrichtung anzeigen. Gemäß dieser Variante können Vibrationen erkannt werden, was ein häufiges Problem ist, das bei nicht rotierenden Wellen, insbesondere Getriebewellen, auftritt, wenn die Maschine nicht rotiert, aber Vibrationen vorhanden sind. Derartige Vibrationen können zu Flussänderungen führen und damit zu Drehwinkelgeschwindigkeitsberechnungen. Die Sensorvorrichtung misst jedoch keine eindeutige Drehrichtung, da abwechselnd mit gleichen Anteilen Rechts- bzw. Linksdrehungen erkannt werden.

Die Magnetfeldsensoren der Sensorvorrichtung können aktive Magnetfeldflusssensoren sein, die vorzugsweise nach dem Hall-Prinzip arbeiten (Hall-Sonden).

Gemäß einem weiteren Aspekt der Erfindung kann die Sensorvorrichtung ein Gehäuse aufweisen, das einen Stirnbereich aufweist, in dem zur Ausbildung einer Messspitze die Magnetfeldsensoren gehaltert sind. Das Gehäuse kann ferner einen am gegenüberliegenden Ende angeordneten Gehäusekörper aufweisen, in dem eine Steckeranbindung für die Sensorvorrichtung und eine Mikroprozessoreinheit zur Auswertung der Messsignale der Magnetfeldsensoren, an die die Ausgangssignale der Magnetfeldsensoren zur Auswertung übermittelt werden, angeordnet sind. Das Gehäuse kann ferner den Gewindeabschnitt zur Verschraubung der Sensorvorrichtung aufweisen, der vorzugsweise zwischen dem Stirnbereich und dem Gehäusekörper angeordnet ist.

Die Magnetfelderzeugungseinrichtung kann in Form eines Permanentmagneten oder in Form einer bestrombaren Spule, die ein Magnetfeld erzeugt, ausgeführt sein. Vorzugsweise umfasst die Magnetfelderzeugungseinrichtung eine in einem Sensorgehäuse integrierte Spule zur Erzeugung des Magnetfelds. Die Spule kann beispielsweise in den Gewindeabschnitt integriert sein.

Die Erfindung betrifft weiterhin ein Kraftfahrzeug, insbesondere ein Nutzfahrzeug, mit einer Anordnung oder einer Sensorvorrichtung wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

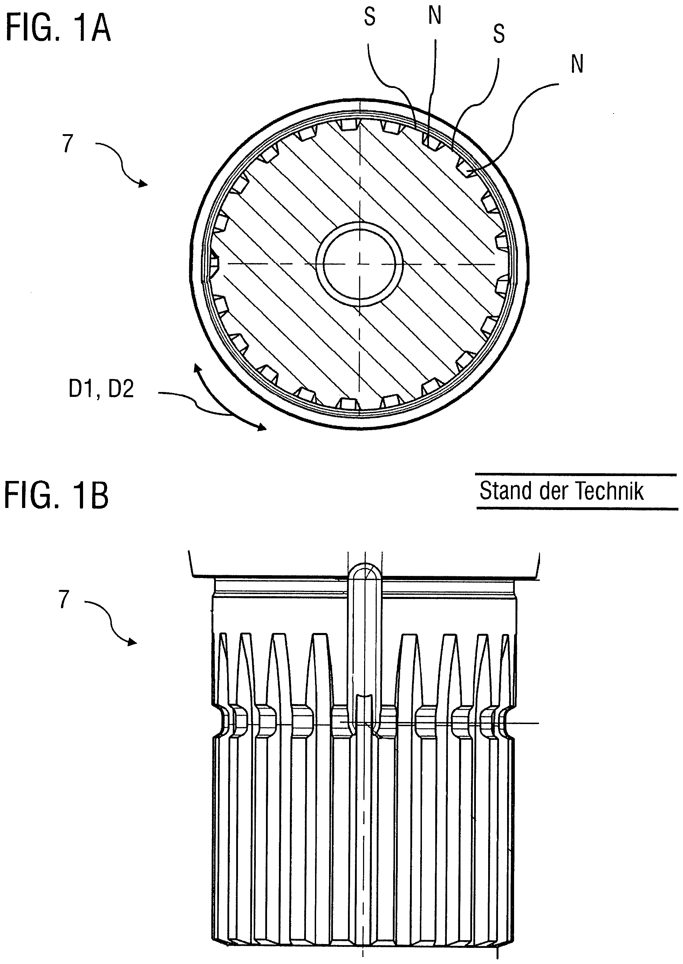

- Figur 1A: eine Vorderansicht einer Welle;
- Figur 1: B eine Draufsicht auf die Welle der Figur 1A;
- Figur 2A: eine perspektivische Ansicht eines aus dem Stand der Technik bekannten Drehzahlsensors;
- Figur 2B: eine schematische Ansicht einer Sensorvorrichtung gemäß einer Ausführungsform der Erfindung; und
- Figur 3: eine schematische Darstellung einer Anordnung einer Sensorvorrichtung und eines rotierenden Bauteils gemäß einer Ausführungsform der Erfindung.

Die Figuren 1A und 1B zeigen eine an sich bekannte Welle 7 aus einem ferromagnetischen Material als Beispiel für ein im Betrieb rotierendes Bauteil, dessen Drehwinkelgeschwindigkeit, Beschleunigung und Drehrichtung mittels einer Sensorvorrichtung gemessen werden sollen. Die Welle weist eine regelmäßige Umfangstruktur aus Nuten N und Stegen S auf. Alle Stege S haben die gleiche Breite, und alle Nuten N haben ebenfalls die gleiche Breite, wobei die Breite der Nuten und der Stege voneinander unterschiedlich sein kann. Mit dem mit D1 und D2 gekennzeichneten Doppelpfeil sind die beiden möglichen Drehrichtungen D1 und D2 der Welle 7 gekennzeichnet.

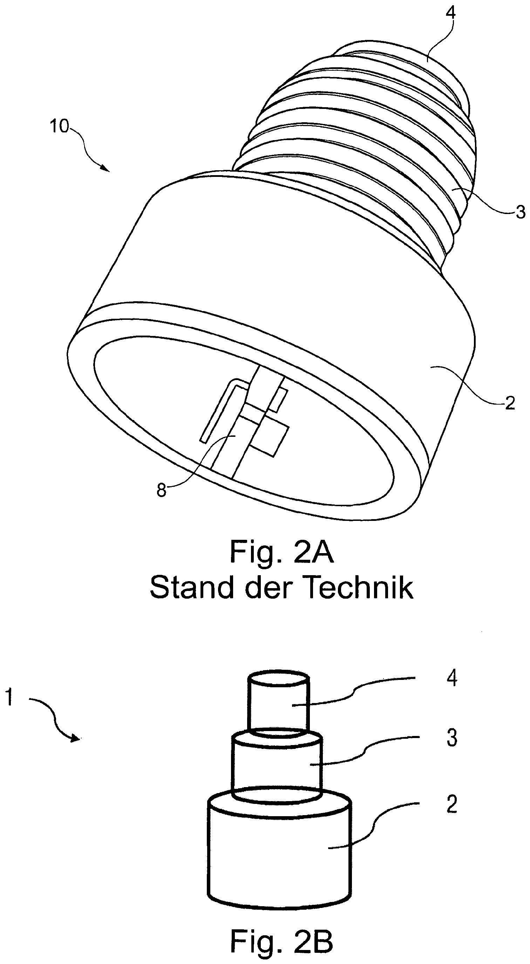

Figur 2A zeigt schematisch in einer perspektivischen Ansicht den Aufbau eines an sich aus dem Stand der Technik bekannten Drehzahlsensors 10. Der bekannte Drehzahlsensor ist als verschraubbarer Drehzahlsensor ausgeführt und verfügt hierzu über einen Halsabschnitt 3 mit einem Außengewinde. Über den Gewindeabschnitt 3 wird der Sensor in eine korrespondierende Gewindeöffnung eingeschraubt, so dass die Sensorspitze 4 radial gegenüberliegend zu der Umfangsstruktur der Welle 7 angeordnet ist. In der Sensorspitze 4, die als sich verjüngender Stirnbereich ausgeführt ist, sind in dem aus dem Stand der Technik bekannten Drehzahlsensor 10 eine oder zwei Hall-Sonden angeordnet. An dem gegenüberliegenden Ende weist der Drehzahlsensor 10 einen Körper 2 auf, in dem eine Steckeranbindung 8 und eine Mikroprozessoreinheit angeordnet sind. An die Mikroprozessoreinheit werden die Ausgangssignale der Hall-Sonden übermittelt.

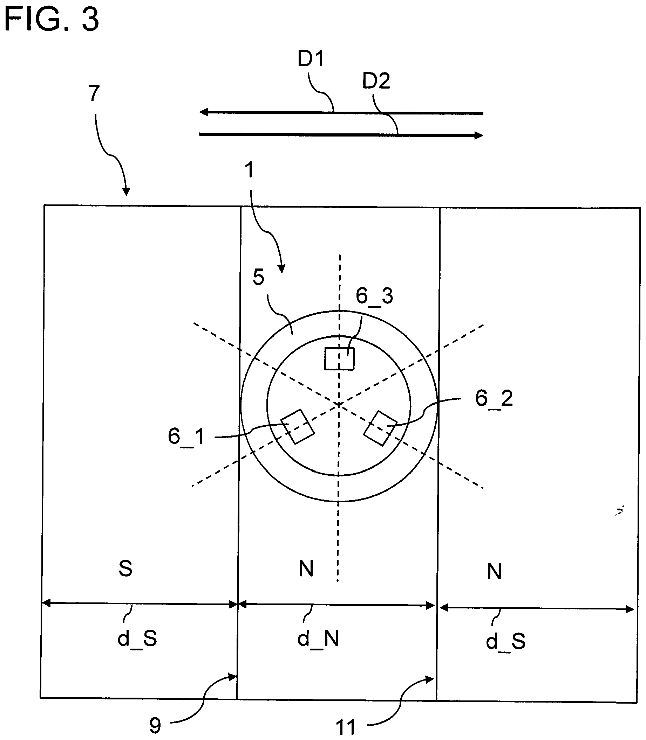

Figur 2B zeigt eine Ausführungsform einer Sensorvorrichtung 1 in stark schematisierter Darstellung. Die Sensorvorrichtung 1 verfügt über ein vergleichbares Gehäuse wie die aus dem Stand der Technik bekannte Sensorvorrichtung 10 mit einem Stirnbereich 4, einem Gewindeabschnitt 3 und einem Gehäusekörper 2, in dem eine Steckeranbindung und die Mikroprozessoreinheit angeordnet sind. Im Unterschied zu dem aus dem Stand der Technik bekannten Sensor 10 sind im Stirnbereich 4 des erfindungsgemäßen Sensors 1 drei aktive Magnetfeldsensoren angeordnet, was in Figur 3 dargestellt ist. Die Spule (in Figur 2B nicht dargestellt) zur Erzeugung des Magnetfelds ist in den Gehäusemantel integriert.

Figur 3 zeigt eine Draufsicht einer Anordnung aus der Welle 7 und der Sensorvorrichtung 1. Von der Welle 7 ist in Figur 3 nur ein Ausschnitt jeweils einer Nut N und zweier benachbarter Stege S gezeigt. Die Breite der Stege ist mit dem Doppelpfeil d_S gekennzeichnet, die Breite der Nut mit dem Doppelpfeil d_N. Die beiden Drehrichtungen der Welle 7 sind wiederum mit den Pfeilen D1 und D2 gekennzeichnet.

Von dem Sensor 1 sind in Figur 3 zur Verdeutlichung des Konstruktionsprinzips nur die Spule 5 zur Erzeugung des Magnetfelds und die drei aktiven Magnetfeldsensoren 6_1, 6_2 und 6_3 schematisch dargestellt. Die Spule 5 ist in den Gehäusemantel des Gewindeabschnitts 3 integriert und erzeugt ein Magnetfeld, mit dem die drei Magnetfeldsensoren 6_1, 6_2 und 6_3 zusammenwirken. Die drei Magnetfeldsensoren sind im Prinzip baugleich ausgeführt und in Form eines gleichseitigen Dreiecks angeordnet, d. h., die Anordnungspunkte der drei Magnetfeldsensoren 6_1, 6_2 und 6_3 stellen die Eckpunkte eines gleichseitigen Dreiecks dar. Zur Illustration sind die gestrichelten Linien durch den Sensor und den Mittelpunkt des Dreiecks gezeichnet, wobei jeweils die gestrichelten Linien zweier benachbarter Magnetfeldsensoren einen Winkel von 60° miteinander bilden. Charakteristisch ist, dass der gesamte Sensorkopf in seinem Durchmesser kleiner gleich der Breite d_N der Nut N ist. Die drei Magnetfeldsensoren 6_1 bis 6_3 sind jeweils mit einer Mikroprozessoreinheit verbunden, die sich im Gehäusekörper 2 befindet.

Wie in Figur 3 erkennbar ist, stellt die dreieckförmige Anordnung der drei Magnetfeldsensoren 6_1, 6_2 und 6_3 sicher, dass diese nicht entlang einer Linie fluchtend angeordnet sind, sondern so versetzt angeordnet sind, dass unabhängig von der Einbauverschraubstellung der Sensorvorrichtung bei Drehung des Bauteils jede Kante eines Stegs S zumindest zwei der mindestens drei Magnetfeldsensoren zeitlich versetzt erreicht. In der Umfangsrichtung der Stege S bzw. Nuten N bzw. in Drehrichtung D1, D2 des Bauteils gesehen sind somit immer mindestens zwei der drei Magnetfeldsensoren 6_1 bis 6_3 versetzt angeordnet. In jeder möglichen Verschraubstellung der Sensorvorrichtung 1 existieren somit immer mindestens zwei Magnetfeldsensoren, die einen unterschiedlichen Abstand zur Flanke des nächstliegenden Steges haben. In der in Figur 3 gezeigten Einbauposition erreicht bei einer Drehung des Bauteils 7 in Richtung D2 die Flanke, z. B. die Flanke 9, zuerst den Sensor 6_1, dann den Sensor 6_3 und schließlich den Sensor 6_2. Bei einer Drehung in die entgegengesetzte Richtung D1 ist die Reihenfolge umgekehrt.

Selbst in einer Einbauposition, bei der beispielsweise die Sensoren 6_2 und 6_3 den gleichen Abstand zur Flanke, z. B. zur Flanke 11, hätten (in Figur 3 nicht gezeigt), wäre der Abstand des Sensors 6_1 von der Flanke 11 ein anderer wie der der Sensoren 6_2 und 6_3. Die Magnetfeldsensoren 6_1 bis 6_3 messen die Änderungen im magnetischen Fluss zwischen den Nuten N und Stegen S. Hierzu ist die Sensorvorrichtung 1 ausgeführt, die Zeit für eine Flussänderung für jeden Sensor separat zu erfassen. Ferner kann die Zeit für die Flussänderung zwischen den Sensoren ebenfalls erfasst werden.

Mit der vorliegenden Ausführung des Sensors 1 gibt es beispielsweise mehrere Möglichkeiten, die Wellendrehwinkelgeschwindigkeit zu messen. Gemäß einer ersten Variante kann einer der drei Sensoren 6_1 bis 6_3 die Flankenwechsel zwischen den Nuten und Stegen zählen. Ist die Anzahl der Nuten und Stege bekannt, kann die Drehwinkelgeschwindigkeit berechnet werden. Gemäß einer weiteren Variante wird die Zeitmessung zwischen den drei Sensoren ausgewertet. Dadurch kann die Drehwinkelgeschwindigkeit unter Kenntnis der geometrischen Anordnung der Sensoren ermittelt werden.

Die Drehrichtung des Bauteils 7 wird bestimmt, indem die Flussänderung zwischen den beiden in Umfangsrichtung gesehen am weitesten auseinanderliegenden Sensoren ausgewertet wird. Dies sind in der in Figur 3 gezeigten Einbaulage die Sensoren 6_1 und 6_2.

Hierzu wird noch in einer Anlernphase die Drehrichtung angelernt, wobei die Welle 7 in eine vorgegebene Drehrichtung gedreht wird, um der Sensorvorrichtung 1 beizubringen, was die Vorwärtsrichtung und die Rückwärtsrichtung ist. Zum Beispiel erkennt der Sensor 6_1 die Flussänderung von niedrigem Fluss auf höheren Fluss vor dem Sensor 6_3 bei einer Drehung in Richtung D2, was per Definition dann die angelernte Drehrichtung D2 ist und in der Auswerteelektronik hinterlegt ist. Erkannt dann im Messbetrieb der Sensor 6_1 vor dem Sensor 6_3 die Flussänderung von niedrigem Fluss auf höheren Fluss, wird die Drehrichtung D2 erkannt. Andernfalls liegt die entgegengesetzte Drehrichtung D1 vor.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Sensorvorrichtung
- 2: Gehäusekörper
- 3: Gewindeabschnitt
- 4: Messspitze
- 5: Spule zur Erzeugung des Magnetfelds
- 6_1, 6_2, 6_3: Aktiver Magnetfeldsensor
- 7: Magnetisierbare Welle
- 8: Steckeranschluss
- 9, 11: Flanke
- 10: Drehzahlsensor aus dem Stand der Technik
- S: Steg
- N: Nut
- D1, D2: Drehrichtung
- d_S: Breite der Stege
- d_N: Breite der Nuten

## Patentansprüche

1. Anordnung (7, 1) zur berührungslosen Ermittlung einer Drehzahl und Drehrichtung eines im Betrieb rotierenden Bauteils, insbesondere einer magnetisierbaren Welle, umfassend:
a) ein im Betrieb rotierendes Bauteil (7), das an zumindest einem Umfangsbereich eine Umfangsstruktur aus steg- oder zahnförmig ausgebildeten radialen Vorsprüngen (S) und dazwischen liegenden Nuten (N) oder Zahnlücken aufweist; und
b) eine verschraubbare Sensorvorrichtung (1) zur Ermittlung einer Drehzahl und Drehrichtung des Bauteils (7), aufweisend
b1) einen Gewindeabschnitt (3) zur ortsfesten Anordnung der Sensorvorrichtung (1), so dass die Umfangsstruktur an der Sensorvorrichtung vorbeibewegbar ist,
b2) eine Magnetfelderzeugungseinrichtung und
b3) eine Magnetfelderfassungseinrichtung;
**dadurch gekennzeichnet,**
c) **dass** die Magnetfelderfassungseinrichtung mindestens drei Magnetfeldsensoren (6_1, 6_2, 6_3) aufweist, die nicht entlang einer Linie fluchtend angeordnet sind, wobei der Abstand der am weitesten voneinander entfernten Magnetfeldsensoren kleiner gleich einer Breite (d_N) der Nuten (N) oder Zahnlücken ist;
d) **dass** die Sensorvorrichtung (1) ausgeführt ist, eine Zeit für eine Flussänderung für jeden der Magnetfeldsensoren separat zu erfassen; und
e) **dass** die Anordnung eine Auswerteeinheit zur Auswertung der Ausgangssignale der mindestens drei Magnetfeldsensoren (6_1, 6_2, 6_3) aufweist, die eingerichtet ist, die beiden in Drehrichtung des Bauteils gesehen am weitesten voneinander beabstandeten Magnetfeldsensoren (6_1, 6_2) zu bestimmen und zur Bestimmung einer Drehrichtung die gemessenen Flussänderungen dieser zwei Magnetfeldsensoren (6_1, 6_2) zu verwenden.

2. Anordnung aus Anspruch 1, **dadurch gekennzeichnet, dass** die Magnetfelderfassungseinrichtung aus drei Magnetfeldsensoren (6_1, 6_2, 6_3) gebildet ist, die in Form eines gleichseitigen Dreiecks angeordnet sind.

3. Anordnung nach Anspruch 1 oder 2, **dadurch gekennzeichnet, dass** die Sensorvorrichtung eine Anlernfunktion aufweist, mittels der in der Sensorvorrichtung hinterlegbar ist, welcher der beiden zur Bestimmung der Drehrichtung verwendeten Magnetfeldsensoren (6_1, 6_2) zuerst eine Flussänderung von niedrigerem Fluss auf höheren Fluss erfassen muss, damit eine erste Drehrichtung (D1) und nicht die entgegengesetzte Drehrichtung (D2) vorliegt.

4. Anordnung nach einem der vorhergehenden Ansprüche, **dadurch gekennzeichnet, dass** die mindestens drei Magnetfeldsensoren (6_1, 6_2, 6_3) in einer Ebene senkrecht zu einer Radialrichtung des Bauteils bzw. der Umfangsstruktur angeordnet sind.

5. Anordnung nach einem der vorhergehenden Ansprüche, **dadurch gekennzeichnet, dass** die Sensorvorrichtung (1) eingerichtet ist, eine Vibration des Bauteils zu erkennen, falls die Magnetfeldsensorsignale eine Drehwinkelgeschwindigkeit, aber keine eindeutige Drehrichtung anzeigen.

6. Anordnung nach einem der vorhergehenden Ansprüche, **dadurch gekennzeichnet, dass** die Magnetfeldsensoren (6_1, 6_2, 6_3) aktive Magnetfeldflusssensoren sind, die vorzugsweise nach dem Hall-Prinzip arbeiten.

7. Anordnung nach einem der vorhergehenden Ansprüche, **gekennzeichnet durch** ein Gehäuse der Sensorvorrichtung, aufweisend
a) einen Stirnbereich (4), in dem zur Ausbildung einer Messspitze die Magnetfeldsensoren (6_1, 6_2, 6_3) gehaltert sind,
b) einen am gegenüberliegenden Ende angeordneten Gehäusekörper (2), in dem eine Steckeranbindung (8) und eine Mikroprozessoreinheit angeordnet sind, an die die Ausgangssignale der Magnetfeldsensoren zur Auswertung übermittelt werden, und
c) einen Gewindeabschnitt (3) zur Verschraubung der Sensorvorrichtung, der zwischen dem Stirnbereich (4) und dem Gehäusekörper (2) angeordnet ist.

8. Anordnung nach einem der vorhergehenden Ansprüche, **dadurch gekennzeichnet,**
a) **dass** die Magnetfelderzeugungseinrichtung eine in einem Sensorgehäuse integrierte Spule zur Erzeugung des Magnetfelds umfasst; und/oder
b) **dass** die Magnetfelderzeugungseinrichtung eine in den Gewindeabschnitt (3) integrierte Spule zur Erzeugung des Magnetfelds umfasst.

9. Kraftfahrzeug, insbesondere Nutzfahrzeug, mit einer Anordnung (7, 1) nach einem der vorhergehenden Ansprüche.

## Claims

1. Arrangement (7, 1) for contactlessly determining a revolution rate and a direction of rotation of a component, in particular a magnetisable shaft, that rotates during its operation, comprising:
a) a component (7) that rotates during its operation that comprises on at least one peripheral region a circumferential structure of web-shaped or tooth-shaped radial protrusions (S) and interposed grooves (N) or tooth gaps; and
b) a screw-in sensor device (1) for determining a revolution rate and a direction of rotation of the component (7), comprising
b1) a threaded segment (3) for the positionally fixed arrangement of the sensor device (1), so that the circumferential structure can be moved past the sensor device,
b2) a magnetic field generating device and
b3) a magnetic field detecting device;
**characterized**
c) **in that** the magnetic field detecting device comprises at least three magnetic field sensors (6_1, 6_2, 6_3) that are not disposed in alignment along a line, wherein the distance between the magnetic field sensors that are the farthest apart from each other is less than or equal to a width (d_N) of the grooves (N) or tooth gaps;
d) **in that** the sensor device (1) is implemented to record a time for a change of flux for each of the magnetic field sensors separately; and
e) **in that** the arrangement has an analysis unit for analysis of the output signals of the at least three magnetic field sensors (6_1, 6_2, 6_3), which is configured to determine the two magnetic field sensors (6_1, 6_2) that are the farthest apart from each other when viewed in the direction of rotation of the component and to use the measured flux changes of said two magnetic field sensors (6_1, 6_2) to determine a direction of rotation.

2. Arrangement of Claim 1, **characterized in that** the magnetic field detecting device is formed of three magnetic field sensors (6_1, 6_2, 6_3) that are disposed in the form of an equilateral triangle.

3. Arrangement according to Claim 1 or 2, **characterized in that** the sensor device comprises a learning function, by means of which it can be stored in the sensor device which of the two magnetic field sensors (6_1, 6_2) that are used for the determination of the direction of rotation must first detect a change of flux from a lower flux to a higher flux so that there is a first direction of rotation (D1) and not the opposite direction of rotation (D2).

4. Arrangement according to any one of the preceding claims, **characterized in that** the at least three magnetic field sensors (6_1, 6_2, 6_3) are disposed in a plane perpendicular to a radial direction of the component or of the circumferential structure.

5. Arrangement according to any one of the preceding claims, **characterized in that** the sensor device (1) is configured to detect a vibration of the component if the magnetic field sensor signals indicate an angular rate of rotation but no definite direction of rotation.

6. Arrangement according to any one of the preceding claims, **characterized in that** the magnetic field sensors (6_1, 6_2, 6_3) are active magnetic field flux sensors that preferably operate according to the Hall principle.

7. Arrangement according to any one of the preceding claims, **characterized by** a housing of the sensor device, comprising
a) an end region (4) in which the magnetic field sensors (6_1, 6_2, 6_3) are mounted to form a measurement tip,
b) a housing body (2) disposed at the opposite end, in which are disposed a plug connector (8) and a microprocessor unit to which the output signals of the magnetic field sensors are transmitted for analysis, and
c) a threaded segment (3) for screwing in the sensor device, which is disposed between the end region (4) and the housing body (2).

8. Arrangement according to any one of the preceding claims, **characterized in that**
a) the magnetic field generating device comprises a coil for generating the magnetic field that is integrated within a sensor housing; and/or
b) the magnetic field generating device comprises a coil for generating the magnetic field that is integrated within the threaded segment (3).

9. Motor vehicle, in particular commercial vehicle, with an arrangement (7, 1) according to any one of the preceding claims.

## Revendications

1. Dispositif (7, 1) de détermination sans contact du régime et du sens de rotation d'un composant rotatif en fonctionnement, en particulier d'un arbre pouvant être magnétisé, comprenant :
a) un composant rotatif (7) en fonctionnement qui présente sur au moins une zone périphérique une structure périphérique de saillies (S) radiales en forme de traverses ou de dents et de rainures (N) ou d'entredents placé(e)s entre celles-ci ; et
b) un dispositif de capteurs pouvant être vissé (1) pour déterminer un régime et un sens de rotation du composant rotatif (7), présentant
b1) un tronçon fileté (3) pour l'agencement fixe du dispositif de capteurs (1) de sorte que la structure périphérique puisse être avancée devant le dispositif de capteurs,
b2) un dispositif de production de champ magnétique et
b3) un dispositif de détection de champ magnétique ;
**caractérisé en ce**
c) **que** le dispositif de détection de champ magnétique présente au moins trois capteurs de champ magnétique (6_1, 6_2, 6_3), qui ne sont pas disposés bord à bord le long d'une ligne, la distance des capteurs de champ magnétique les plus éloignés l'un de l'autre étant inférieure ou égale à une largeur (d_N) des rainures (N) ou des entredents ;
d) **que** le dispositif de capteurs (1) est conçu pour détecter séparément un temps pour une modification de flux pour chacun des capteurs de champ magnétique ; et
e) **que** l'agencement présente une unité d'évaluation pour évaluer les signaux de sortie des au moins trois capteurs de champ magnétique (6_1, 6_2, 6_3) qui est conçue pour déterminer les deux capteurs de champ magnétique (6_1, 6_2) les plus éloignés l'un de l'autre vu dans le sens de rotation du composant, et utiliser les modifications de flux mesurées de ces deux capteurs de champ magnétique (6_1, 6_2) pour déterminer un sens de rotation.

2. Agencement selon la revendication 1, **caractérisé en ce que** le dispositif de détection de champ magnétique est composé de trois capteurs de champ magnétique (6_1, 6_2, 6_3) qui sont disposés sous forme d'un triangle équilatéral.

3. Agencement selon la revendication 1 ou 2, **caractérisé en ce que** le dispositif de capteurs présente une fonction d'apprentissage au moyen de laquelle il peut être consigné dans le dispositif de capteurs, lequel des deux capteurs de champ magnétique (6_1, 6_2) employés pour déterminer le sens de rotation doit d'abord détecter une modification de flux du flux le plus bas au flux le plus haut afin qu'il y ait premier un sens de rotation (D1) et non le sens de rotation inverse (D2) .

4. Agencement selon l'une des revendications précédentes, **caractérisé en ce que** les au moins trois capteurs de champ magnétique (6_1, 6_2, 6_3) sont disposés dans un plan vertical à un sens radial du composant, respectivement de la structure périphérique.

5. Agencement selon l'une des revendications précédentes, **caractérisé en ce que** le dispositif de capteurs (1) est conçu pour détecter une vibration du composant dans le cas où les signaux de capteur de champ magnétique indiquent une vitesse d'angle de rotation mais pas de sens de rotation significatif.

6. Agencement selon l'une des revendications précédentes, **caractérisé en ce que** les capteurs de champ magnétique (6_1, 6_2, 6_3) sont des capteurs de flux de champ magnétique actifs qui fonctionnent de préférence selon le principe de Hall.

7. Agencement selon l'une des revendications précédentes, **caractérisé par** un boîtier du dispositif de capteurs présentant :
a) une partie avant (4) dans laquelle les capteurs de champ magnétique (6_1, 6_2, 6_3) sont détenus pour former une pointe de mesure,
b) un corps de boîtier (2) disposé sur l'extrémité opposée, dans lequel sont disposées une connexion par fiches (8) et une unité de micro-processeur à laquelle les signaux de sortie des capteurs de champ magnétique sont transmis pour évaluation, et
c) un tronçon fileté (3) pour visser le dispositif de capteurs, qui est disposé entre la partie avant (4) et le corps de boîtier (2).

8. Agencement selon l'une des revendications précédentes, **caractérisé en ce**
a) **que** le dispositif de production de champ magnétique comprend une bobine intégrée dans un boîtier de capteur pour produire le champ magnétique ; et/ou
b) **que** le dispositif de production de champ magnétique comprend une bobine intégrée dans le tronçon fileté (3) pour produire le champ magnétique.

9. Véhicule automobile, en particulier véhicule utilitaire, comprenant un agencement (7, 1) selon l'une des revendications précédentes.
